# EUROPEAN PATENT SPECIFICATION

(11) **EP 4 479 351 B1**
(45) Date of publication and mention of the grant of the patent: **21.05.2025**
(21) Application number: 23710462.5
(22) Date of filing: 28.02.2023
(51) Int. Cl.: C02F 9/00, C02F 103/02, C02F 103/16, C21D 8/00, C02F 1/00, C02F 1/40, C02F 1/48, B22D 11/22, F27D 9/00

(54) **STEEL PLANT WITH DIRECT COOLING WATER TREATMENT CIRCUIT AND RELATED PROCESS**
STAHLWERK MIT KREISLAUF ZUR DIREKTEN KÜHLWASSERBEHANDLUNG UND ZUGEHÖRIGES VERFAHREN
ACIÉRIE AVEC CIRCUIT DE TRAITEMENT DES EAUX DE REFROIDISSEMENT DIRECT ET PROCÉDÉ ASSOCIÉ

(30) Priority: 01.03.2022 IT 202200003797
(43) Date of publication of application: 25.12.2024
(73) Proprietor: DANIELI & C. OFFICINE MECCANICHE S.P.A., 33042 Buttrio (UD) (IT)
(72) Inventor: NARDELLA, Antonio, 50022 Greve in Chianti (FI) (IT); FABIANI, Massimo, 33042 Buttrio (UD) (IT)
(74) Representative: Münchow, Vera Ute Barbara
(86) International application number: PCT/IB2023/051836
(87) International publication number: WO 2023/166406

(56) References cited:
- WO-A1-2014/091819
- IT-A1- 202000 007 510
- US-A- 5 785 847

## Description

### TECHNICAL FIELD

The present invention refers to a steel plant for the production of long products, in particular bars, rods, profiles, wires and the like, or for flat products, in particular strips, sheets and the like comprising:
(a) a plurality of machinery equipped with direct cooling systems, divided into at least a first and a second group of machinery, each group comprising one or more machinery, wherein the groups of machinery are distinguished by the different higher or lower concentration of scale released into the cooling water accumulated during use of each group of machinery;
(b) a circuit of treatment of direct cooling waters exiting said direct cooling systems, comprising a plurality of cooling water treatment devices.

### STATE OF THE ART

Steel plants for the production of flat and long products generally provide, upstream of the rolling line, a continuous casting machine or a plate for loading material to be rolled, followed by a descaler, an emergency shear, preferably a reheating furnace, a further emergency cutting device, optionally another descaler, roughing cages, another shear, a possible further reheating furnace, for example an induction one, an intensive or accelerated cooling device and a further descaler, pre-finishing and/or finishing cages, a laminar cooling device, a further shear for cutting to size the rolled product and then winders for the products to be wound, or discharge plates for the bars or a coil-shaping head and a conveyor belt for the rod. Along the line, coolings are necessary, for example for the product, the parts of the devices used, the rolling rolls, etc., which can be made by direct coolings or indirect coolings.

Direct cooling is for example applied in rolling and in pre-finishing of a metal product and can involve detaching oxides from the product, called scale, which in general at this phase of processing has large dimensions, other direct coolings are carried out in the finishing and quenching of the rolled product, and the detachment in water of a finer scale takes place, being the temperatures lower and a larger scale detachment having already occurred upstream. The cooling waters accumulate under the machinery and drag the scale coming from the rolling, reheatings and accessory processings, thus assuming different characteristics in terms of quantity/concentration and dimensions of the contained scale. Scale concentrations in the waters also depend on the volume of waters used and the quantity of scale produced. For example, in flat products, which use a lot of water (in the order of magnitude of several thousand m³/h), the average scale concentration will be lower than in the rolling plants for long products, which on the contrary use less water for the different cooling phases.

Usually cooling plants in a steel plant for the production of flat products, such as direct quenching or the accelerated cooling in the rolling mills or laminar cooling have a dedicated water treatment plant (*Water Treatment Plant,* WTP) in order to treat and cool the water, and return it to the cooling systems. This circuit is separate from the main circuit that feeds the rest of the line. The demand for water from such cooling systems is generally intermittent depending on the cooling phases that the product has to undergo. The accelerated cooling circuit and the side spray units produce less dirty waters, while the rolling mills, the descalers and the reheating furnaces produce greater quantities of scale in the water.

By long products are generally meant rods, wires, bars and profiles. The cast products or those loaded via the plate are rolled and undergo high reductions and intermediate reheatings, leading, during direct cooling in the different phases, to the detachment of high quantities of scale compared to flat products, which, using a lot of water, have a greater dilution capacity.

In steel plants for the production of long products, usually, the flows coming from quench cooling systems are sent to the WTP to treat and cool the water and this takes place in parallel with the water flows coming from the rolling mills. This means that WTP must treat the sum of the flow rates coming from quenching, rolling and finishing and therefore must be oversized in terms of the size of the treatment units.

The WTP of any steel plant mainly requires the following treatment/cooling sections: collecting tanks, pumping stations and pump room, sand filters and relative sludge treatment, cooling towers, civil works and relative buildings, electrical and automation devices and plants, pipings, and in specific cases units for dosing chemicals.

The steel plants referred to above provide for separate water treatment circuits (production of flat products) for machinery producing more or less dirty waters to adapt the treatment to the needs or scale content or a circuit that treats together (production of long products) all the waters deriving from the machinery, regardless of whether these machineries produce waters that are lean or rich in scales, this results in high costs and extensive and complex circuits and in the need for a large number of cooling water treatment devices.

The expense in terms of devices needed to treat the waters is considerable, on the one hand for the large quantities of waters to be filtered and purified, on the other hand to have to provide for more than one circuit to treat the waters differently charged with scales, an expense that results in a significant increase in the capacity and/or number of water treatment devices. This need has a negative impact on OPEX and CAPEX values. OPEX is the operating expense, which stands for *Operating Expense,* i.e. the cost necessary to manage a product, business or system. Its counterpart, CAPEX (which stands for *Capital Expenditure*), is the cost to install, develop or provide durable assets for the product or the system.

An exemplary steel plant according to the state of the art is disclosed in IT202000007510A1.

### DISCLOSURE OF THE INVENTION

The invention aims to overcome the above drawbacks and to propose a steel plant as initially defined which is less complex, which simplifies the direct cooling water treatment circuit(s), which requires less water and reduces the apparatus necessary to separate the scale from the cooling waters. Further objects or advantages of the invention will result from the following description.

In a first aspect of the invention, the object is achieved by a steel plant as initially defined which is characterized in that
(i) said direct cooling systems of said two groups of machinery are connected in series, wherein said direct cooling systems of said second group of machinery producing cooling waters with a higher scale concentration are situated downstream of said direct cooling systems of the first group of machinery producing cooling waters with a lower scale concentration, so that said direct cooling systems of said first group of machinery feed said direct cooling systems of said second group of machinery; and in that
(ii) said direct cooling water treatment circuit is arranged downstream of said second group of machinery.

The connection in series reduces the quantity of water needed to cool all machinery as the second group of machinery uses the same cooling water exiting the first group of machinery. This makes it possible to reduce the water treatment devices as the volume of the cooling water has been reduced and is to be cleaned only after leaving the second group of machinery.

The inventors have therefore, deviating from the traditional way, identified the opportunity to send the cooling water exiting the first group of machinery directly, i.e. preferably without particular purification and cooling, in the second group of machinery, a connection in series made possible also by the fact that the flow rates of both groups of machinery are comparable. This applies to the production of long products and to the production of flat products.

The optimization proposed by the invention therefore consists in the possibility of directly reusing the water discharged from the sections of the machinery of the first group, for example quenching machinery, in other users, for example rolling mills. These downstream users require a certain water quality and an inlet temperature that the water exiting the first group of machinery satisfies.

In a preferred embodiment of the invention, between said direct cooling systems of said first group and said direct cooling systems of said second group at least one collecting tank is provided along the water flow. The collecting tank allows to compensate for any hydraulic imbalances in the management in series of the two groups of machinery and to take over in the moments of machine downtime or flow rates that are not always completely compatible between the two groups and can be filled not only by the first group of machinery, but also by other sources.

Advantageously, the cleaning of the cooling waters exiting the second group of machinery takes place in the water treatment circuit, in particular realized as a single circuit, which comprises a succession of water treatment devices. In this regard, the cooling water treatment circuit arranged downstream of said second group of machinery comprises a succession of water treatment devices, in turn, comprising, in the following order, at least one tank, preferably at least two tanks for separating scale and/or oil, said tank(s) preferably being divided into several chambers separated by means of one or more weirs, at least one filter unit and at least one cooling tower provided with at least one tank for collecting cooled water and connected to said direct cooling systems of said first group of machinery and/or, if present, to said at least one collecting tank. The cooled water collecting tank can also feed any descaler or continuous casting machinery and relative sprayers present in the steel plant or other users.

The number of the single elements of the circuit may vary, such as the number of the cooling towers, and additional water treatment devices may be integrated. For separating scale, different devices can be envisaged in the relative tanks, such as buckets or magnetic devices that collect the settled scale, scrapers or dredging conveyors, lamellar filters. These systems, as well as the suitable oil separators, are well known to the person skilled in the art. The tank for separating scale and oil is usually oblong in extension. It is also conceivable to replace mentioned elements with others, for example other types of tanks for separating scale.

A first tank could be a simple scale pit, and a second tank an oblong clarifier with two chambers. In a preferred embodiment of the invention, said steel plant is a plant for the production of long products, in particular bars, rods, profiles, wires and the like wherein the first group comprises at least one piece of machinery selected from the group consisting of quenching units and tempering units and that said second group comprises at least one piece of machinery selected from the group consisting of fast finishing blocks, rolling mills and reheating furnaces.

In the case of steel plants for the production of long products it has proved to be preferable that said collecting tank also feeds the at least one scale and/or oil separation tank, in particular a second scale and/or oil separation tank, preferably the most downstream chamber of the tank. This can be useful for managing the hydraulic conditions of the system and avoids scale and oil removal processes where not necessary.

In another preferred embodiment of the invention, said steel plant is a plant for the production of flat products, in particular strips, sheets and the like and said first group of machinery comprises at least one piece of machinery selected from the group consisting of accelerated cooling units, side sweep spray units, direct quenching units, laminar cooling units and that said second group of machinery comprises at least one piece of machinery selected from the group consisting of hot rolling mills and reheating furnaces.

Advantageously, descalers and continuous casting machinery are not directly fed by the first group, but only from clean waters in respective water treatment devices after passing the second group of machinery.

Advantageously, the machinery of said second group are therefore suitable for use in the direct cooling system, without affecting the quality of the product that produce, during use, the waters coming from said cooling systems of said first group of machinery that therefore have characteristics suitable to be able to feed the second group of machinery. Suitable characteristics concern the total suspended solids content, the inlet temperature and the oil and grease content. A second aspect of the invention refers to a process for treating direct cooling waters of a steel plant for the production of long products, in particular bars, rods, profiles, wires and the like, or for flat products, in particular strips, sheets and the like, comprising the following steps:
(I) performing direct cooling in the steel plant resulting in the production of cooling waters rich in scale content and cooling waters less loaded with scale, depending on the machinery which make up said steel plant, which are divided into at least two groups of machinery depending on the scale content present, i.e. released from the product processed by said groups of machinery into the cooling water;
(II) conveying the heated cooling waters with a lower scale content exiting the respective first group of machinery to the second group of machinery of the plant that produce waters rich in scale, preferably by intermediate storage in a collecting tank;
(III) purification of the cooling water heated and contaminated by the second group of machinery in a succession of water treatment devices comprising in the following order at least one tank, preferably at least two scale and/or oil separation tanks, at least one filtration unit and at least one cooling tower, wherein preferably under wet bulb conditions < 26°C, the water is cooled to or below 30°C;
(IV) reintroduction, at least partially, of the waters cleaned and cooled during step (III) into the direct cooling systems of said first group of machinery and/or into said collecting tank, if any.

To define whether a machinery belongs to the first or second group of machinery, the content of total suspended solids expressed in mg/l or ppm of the cooling water exiting the machinery is advantageously assessed. Preferably, the scale lean waters comprises total suspended solids ≤ 70 mg/l, preferably from 20 to 60 mg/l, in the case of a steel plant for the production of long products, and ≤ 50 mg/l, preferably from 5 to 20 mg/l, in the case of a steel plant for the production of flat products. The total suspended solids content is preferably determined according to the Standard Method (*Standard Methods*) SM 2540 D (*Determination of Total Suspended Solids*) accessible for example on the website www.standardmethods.org. The standard deviation to be considered in determining the values is 2.8 mg/l.

Preferably, the waters to be transferred to the machinery of the second group contain for both types of steel plants only traces of oils and/or greases therefore the relative machinery of the first group preferably produce waters with only traces of oils and/or greases, quantifiable in ≤ 2 mg/l. The oils and greases content is preferably determined according to the standard method (*Standard Methods*) SM 5520 B (*Determination of Oil and Grease*) accessible for example on the website www.standardmethods.org. The standard deviation to be considered in determining the values is 0.2 mg/l.

These values are not to be understood as an aim to be achieved by the individual machinery, but they are values that occur during normal use of the machinery and allow their division into a first and a second group of machinery according to the invention.

Advantageously, the waters exiting the first group of machinery have a ΔT with respect to the inlet temperature required by the second group of machinery which corresponds to ≤ 8 °C in the case of a steel plant for the production of long products and a ΔT of ≤ 5 °C in the case of a steel plant for the production of flat products. For long products, between a classic plant and the plant according to the invention the inlet temperature in the second group of machinery can increase for example from 35°C to 43°C; while increases from 30°C to 33.5°C are for example observed for flat products.

The above shown values are respected by the machinery that make up the first group. Therefore, there are no particular contraindications in reusing the cooling water used in them in the users that make up the second group of machinery. The solution according to the invention, optimized with respect to the state of the art, allows to reduce the flow rates of the cooling towers by about 40%, to almost halve the number of sand filters or self-cleaning filters and to reduce by about 20% the size of any sludge thickeners used in connection with the filter units. In addition, reductions in the powers of the pumps, piping lengths/diameters, number of pumps, size of the tanks and pump room are feasible.

Compared to the state of the art, where the waters used in the second group of machinery are purified and cooled waters, the water for the users within the second group, such as rolling mills, in terms of TSS (for long products on average from 30 to 70 mg/l) compared to the quality of the circulating water in the classic solution (containing TSS < 50 mg/l) may have a lower quality which is however acceptable. In a preferred embodiment of the invention, this phenomenon can be mitigated by applying more wear and clogging resistant spray nozzles to the cages of the rolling mill. The increase in water temperature for the users of the rolling mill (for example 43°C) compared to the temperature of the circulating water in the classical solution (for example 35°C) in the production of long products, can be mitigated, in case of wet bulb values below certain thresholds, by cooling the water to suitable temperatures. For example: when the wet bulb is < 26°C, it is possible to cool the water to or below 30°C, consequently the water temperature for the users of the rolling mill will have increased only to 38°C, in the case of the chosen example. The greater complexity in the hydraulic balance of the management in series is manageable with a control unit that controls the various flow rates.

The savings in terms of CAPEX and OPEX are important, too. In the case of the invention, relatively to a steel plant for the production of long products, CAPEX sees savings in relation to the electro-mechanical equipment, civil works, installation activities. Also in terms of OPEX savings can be noted for energy, chemicals and water/sludge conditioning.

The invention has significantly optimized the water treatment plant for the production of long and flat products in terms of CAPEX and OPEX, reusing the water discharged from the first group of machinery (e.g. from accelerated cooling and direct quenching) directly into the direct cooling users in the second group of machinery (e.g. rolling mills), and this without any dedicated WTP for each group of machinery. The principle is applicable to many types of plants: to rolling mills of various kind, for the production of thin strips, sheets, rods, narrow strips, profiles, wires, etc. ranging within a large range of diameters, thicknesses, widths, types of section, etc.; to various types of direct cooling, such as accelerated cooling, laminar cooling; and to quenching units and tempering units of various kind.

In the case of the production of flat products, the users downstream of the first group of machinery are a little more demanding in terms of TSS and ΔT, but the machinery of the first group of machinery, such as accelerated cooling and quenching, still respect the characteristics required by usually supplying waters with a TSS between 5 and 20 ppm, only traces of oil and grease and a ΔT between 2 and 5°C. The envisaged temperature increase at the first group of machinery is generally already compensated upstream, in the WTP, without any effort considering the wet bulb temperature at the plant site.

The optimization proposed by the invention makes certain advantageous modifications to the plant: the cooling towers for the first group of machinery are eliminated, the same applies to sand filters and sludge treatment, dosing units for chemical treatments are no longer needed, while the pumping station of the classic solution can be used, but the pump room WTP is no longer needed and the collecting tanks have been resized.

Obviously, even in the case of the production of flat products, the quality of water for the users of the second group of machinery compared to the classic solution is worse in terms of TSS, but it is still an acceptable quality. The greater complexity in the hydraulic balance of the two circuits in series can be controlled by a relative control unit of the plant, and the increase in temperature at the first group of machinery is not problematic considering a suitable wet bulb temperature in the plant.

The features and advantages described for one aspect of the invention may be transferred *mutatis mutandis* to the other aspects of the invention.

The industrial applicability is obvious from the moment that the following situation occurs: The connection in series of the two groups of machinery manages to achieve considerable savings in terms of CAPEX and OPEX, to considerably lower the volume of cooling water required for direct cooling of all users and to reduce the space required by up to 35%. Having also reduced the number of water treatment devices, civil works and necessary maintenance are reduced, too. The objects and advantages will be further highlighted in the description of preferred embodiment examples of the invention given by way of non-limiting example only.

Variant and further features of the invention are the subject matter of the dependent claims. The description of preferred embodiment examples of the plant and of the process according to the invention is given, by way of non-limiting example, with reference to the attached drawings. In particular, unless otherwise specified, the number, shape, size and materials of the individual components of the plant may vary, and equivalent elements may be applied without deviating from the inventive concept.

### BRIEF DESCRIPTION OF THE DRAWINGS

- Fig. 1: represents in a flowchart a direct cooling water treatment plant in a steel plant for the production of flat products according to the state of the art.
- Fig. 2: represents in a flowchart a direct cooling water treatment plant in a steel plant for the production of flat products according to the invention.
- Fig. 3: represents in a flowchart a direct cooling water treatment plant in a steel plant for the production of long products according to the state of the art.
- Fig. 4: represents in a flowchart a direct cooling water treatment plant in a steel plant for the production of long products according to the invention.
- Fig. 5: represents in a flowchart a direct cooling water treatment plant for accelerated cooling, side spray and direct quenching users according to the state of the art.
- Fig. 6: represents in a flowchart the direct cooling water treatment plant according to figure 5 modified according to the invention.
- Fig. 7: represents in a flowchart the separated direct cooling water treatment circuits of a steel plant for the production of long products according to the state of the art.
- Fig. 8: represents in a simplified flowchart the union of the two cooling water treatment circuits of figure 7 into a single circuit according to the invention.

### DESCRIPTION OF PREFERRED EMBODIMENT EXAMPLES

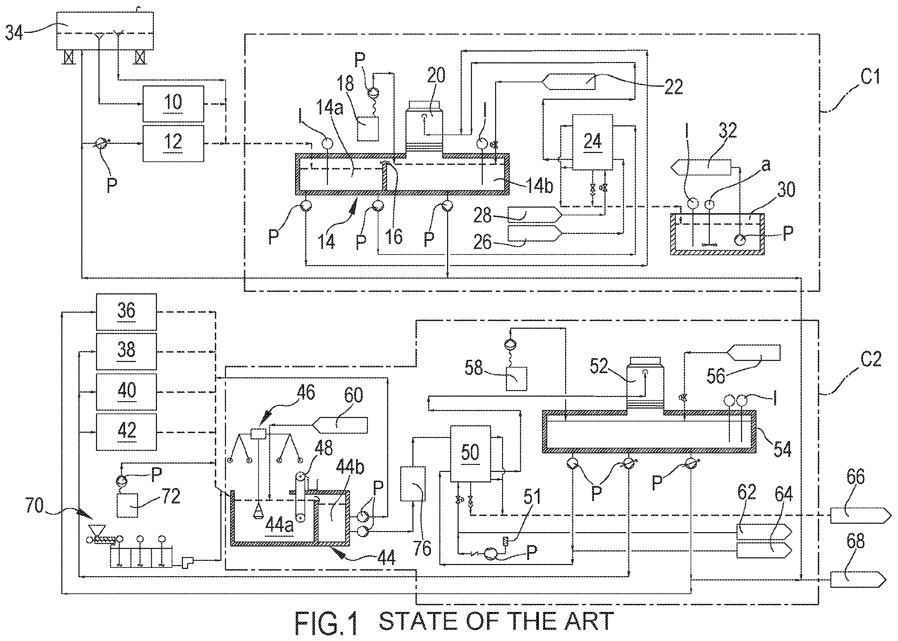

Fig. 1 represents in a flowchart a direct cooling water treatment circuit of a steel plant for the production of flat products according to the state of the art. An exemplary accelerated cooling system **10,** with a flow rate of almost 5,000 m³/h and a side sweep spray unit **12** (flow rate about 100 m³/h) feeds a tank **14** divided into two chambers **14a** and **14b** separated by a weir **16** which transfers water from the chamber **14b** to the chamber **14a.** The chamber **14b** is fed by a tank **18,** a cooling tower **20** and a water make-up source **22.** The cooling tower **20,** in turn, is fed by waters deriving directly from the chamber **14a** or after cleaning in a filter **24.** The filter **24** is also served by washing water **26** or backwash air **28.** The waste from the filter **24** is conveyed to a tank **30** from where the water is subject to drainage or backwash of a scale pit. The cooled water chamber **14b** feeds only the accelerated cooling systems **10** and the side spray systems **12** (which can be fed in case of need also by a storage/distribution tank **34** which can also feed the chamber **14a**) thus closing the water circuit.

In all drawings, level gauges are designated with **l,** pumps with **p** and agitators with **a.** The flow rates indicated below are just an example and vary with the size of the plant. The water treatment circuit includes a second part dedicated to the treatment of water deriving from hot rolling mills for the production of strips at high pressure with flow rates around 3,700 m³/h **36** or at low pressure (with flow rates about 240 m³/h) **38** and descalers (flow rate of about 350 m³/h) **40** and reheating furnaces (flow rate of about 30 m³/h) **42** which all feed a tank **44** with a first chamber **44a** and a second chamber **44b,** and precisely feed the first chamber **44a** provided with a crane with a bucket **46** and with an oil separator **48,** the surface water (freed from oil and heavy scale) overflows into the chamber **44b,** from where it is pumped into a circuit again in the chamber **14a** in order to be cleaned a second time or, passing through a two-chamber clarifier **76** with oil and scale separation devices (not represented) in a filter **50** which feeds a cooling tower **52** that collects the cooled water in a single-chamber tank **54.** The tank can also be fed with make-up water **56** or from a tank **58** for storing and dosing conditioning chemicals, while the tank **44** can also be fed with waters coming from a sludge thickener **60.** The filter **50** is manageable with backwash air **62** and washing water **64,** drain water **66** is drained. The water of the tank **54** can feed the filter **50** for its backwash with clean water, the dirty water producers **38, 40** and **42** and, with a pump and line dedicated to take into consideration the large flow rate, the user **36;** this line provides a blowdown system **68,** also available from the line exiting from the tank **14 to** feed the cooling water users **10** and **12** or the tank **34.** The tank **44** can be fed by a polyelectrolyte source **70** or by a tank **72.**

The plant for the production of flat products also includes a water treatment plant for water deriving from indirect cooling, waters that due to the nature of the indirect treatment (for example from reheating furnaces (flow rates about 400 m³/h)), hot strip rolling mills (flow rates about 1,300 m³/h) and electric motors (with flow rates around 215 m³/h) do not require special purifications and can be transferred directly to a cooling tower (equipped with a water make-up service well known to the person skilled in the art, where necessary with filters and brine pits). These indirect cooling waters are not covered by the invention.

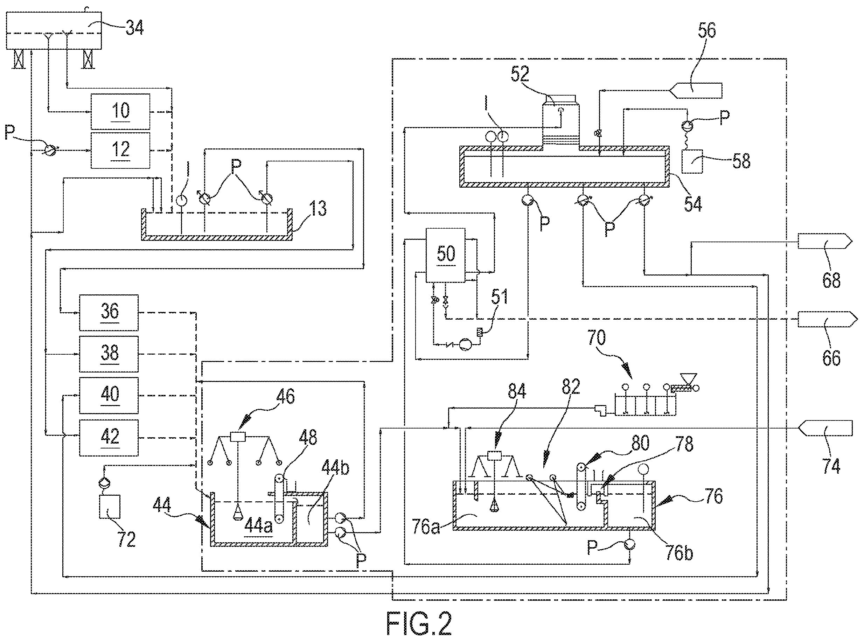

For the different dirty water producers or cooling water users, two distinct cooling circuits **C1** and **C2** can be noted, while the invention combines the circuits into a single circuit **C** putting in series the two groups of producers (**10, 12** and **36, 38, 40** and **42**), as represented in figure 2.

Fig. 2 represents in a flowchart a direct cooling water treatment plant of a steel plant for the production of flat products according to the invention. The elements corresponding to those of the state of the art, as represented in figure 1, have the same reference numbers. The sources of heated and contaminated cooling water **10** and **12** no longer directly feed a cooling tower with a double tank and filter system (**14** and **20**) as represented in Figure 1, but they feed a collecting tank **13** from which they reach with different pumps, depending on the required flow rate, the previously illustrated cooling water users **36** (with a flow rate of about 3,700 m³/h), **38** and **42** (with a flow rate of about 270 m³/h), while the user **40** is fed differently (with a flow rate of about 1,000 m³/h), as will be illustrated below. From the heated direct cooling water sources **36, 38, 40** and **42,** the dirty and heated water reaches the bucket system **46** and oil separator **48** with relative tank **44** like in the state of the art (figure 1). The water exiting the coarse purification in the tank **44,** before being conveyed to a sand filter and to a cooling tower (**50** and **52**), crosses a longitudinal tank **76** with two chambers **76a** and **76b.** The first tank **76a** envisages the sedimentation of scale and its removal with a bucket **84,** a scraper **82** and an oil separator **80** and can be integrated with an addition of polyelectrolyte **70,** the water thus cleaned passes through a weir **78** in the chamber **76b,** from where it reaches the sand filter system **50** and the cooling tower **52** with a single tank **54** already known from the state of the art (figure 1). Make-up **56,** drainage **66** and blowdown **68** systems correspond to what is known from the state of the art. From the tank **54** the cooled waters can feed the filter **50** for the backwash thereof with clean water, the user **40** or the collecting tank **13,** the user **12** or the storage/distribution tank **34.**

The drainage water **60** after an appropriate treatment can return to the tank **76,** this treatment involves a collection in a tank from which it is conveyed in a sludge thickener from which it is always introduced into the tank **76** or through a passage through a further tank it continues in a drainage system to eliminate the sludge that must be taken to the landfill. Additives can be added to the thickener or to the drainage or dehydration system (*dewatering unit*). This part of the plant is well known to the expert and is not illustrated in more detail.

The quality, the flow rate and the temperature of the water exiting the users **10** and **12** is therefore suitable for distribution among the users **36, 38, 40** and **42.**

The tanks **13, 34** and **44** and their connections allow compensating for any flow rate imbalances in feeding the users. The inlet temperatures in the users **36, 38, 40** and **42** are little influenced by the passage from the classic version to the invention.

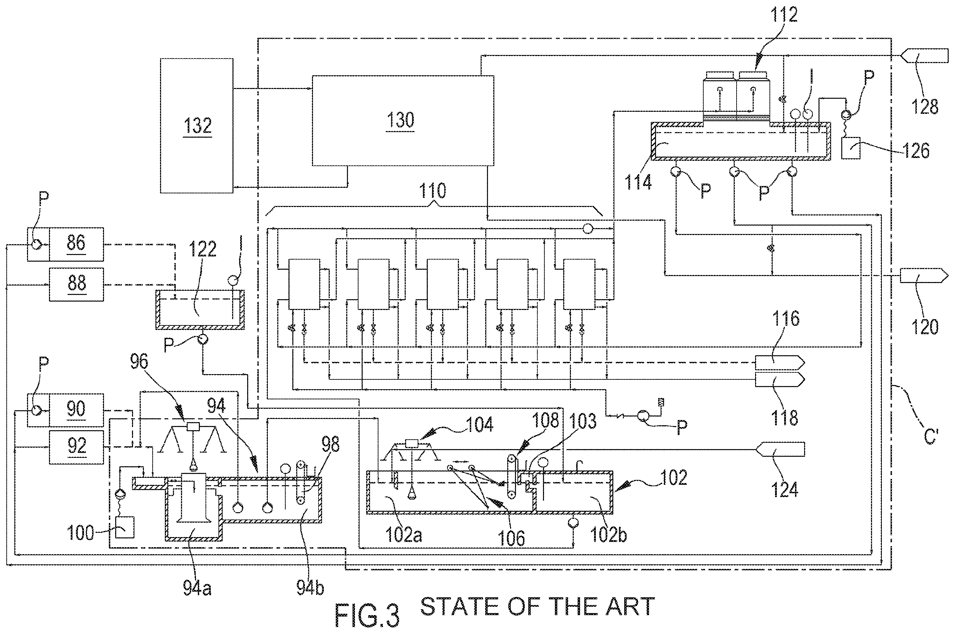

Fig. 3 represents in a flowchart a direct cooling water treatment plant of a steel plant for the production of long products according to the state of the art. The quenching **86** and tempering **88** units and those of the fast-finishing block **90** and of the rolling mill and of the reheating furnace **92** are the direct cooling water users in a steel plant for the production of long products. The waters exiting from the units **90** and **92** are treated in a tank **94** consisting of two chambers **94a** and **94b.** In the first chamber **94a** the largest scale is removed with a bucket **96,** while the water freed of this scale enters the chamber **94b** where it is freed of oil with an oil separator **98.** From the chamber **94b** the water can be returned to the chamber **94a** for flushing the scale in the conveying channel. A tank **100** is used to store and dose a de-oiling product. From the chamber **94b** the clean water is conveyed into a longitudinal tank **102** divided into a first chamber **102a** and a second chamber **102b,** separated by a weir **103.** In the first chamber **102a** there are a bucket **104** for removing scales, a scraper **106** and an oil separator **108.** The clean water exits the second chamber **102b** and passes through a battery of sand filters **110** to reach after filtration two cooling towers **112** that collect the cooled water in a single tank **114.** The battery of filters **110** envisages a drainage **116** and a backwash system **118.** The cooled water collected in the tank **114** leaves the same to be conveyed into the battery of filters **110** for the purpose of back washing the filters, to close the cycle to the users **90** and **92** or to be dedicated to a discharge/a blowdown **120** or to reach the other two direct cooling elements **86** and **88** that discharge their dirty and heated cooling water into a collecting tank **122** that directs the water into the chamber **102b** of the longitudinal tank **102** from where it travels along the path already described. The tank **102** can also be supplied by water from a sludge thickener **124** provided in other parts of the plant. The tank **114** can receive conditioning chemicals from a tank **126** or from a make-up water source **128** that also feeds the indirect cooling water cooling plant **130** not detailed of the plant for the production of long products. This cooling plant **130** is situated in a circuit with indirect cooling users, such as rolling mills and reheating furnaces etc. **132** without special purification units.

The flow rates of the users **86, 88, 90** and **92** are by way of example respectively 700-1300 m³/h, 600 m³/h, about 270 m³/h and 600 m³/h and the inlet temperature Ti is about 35°C.

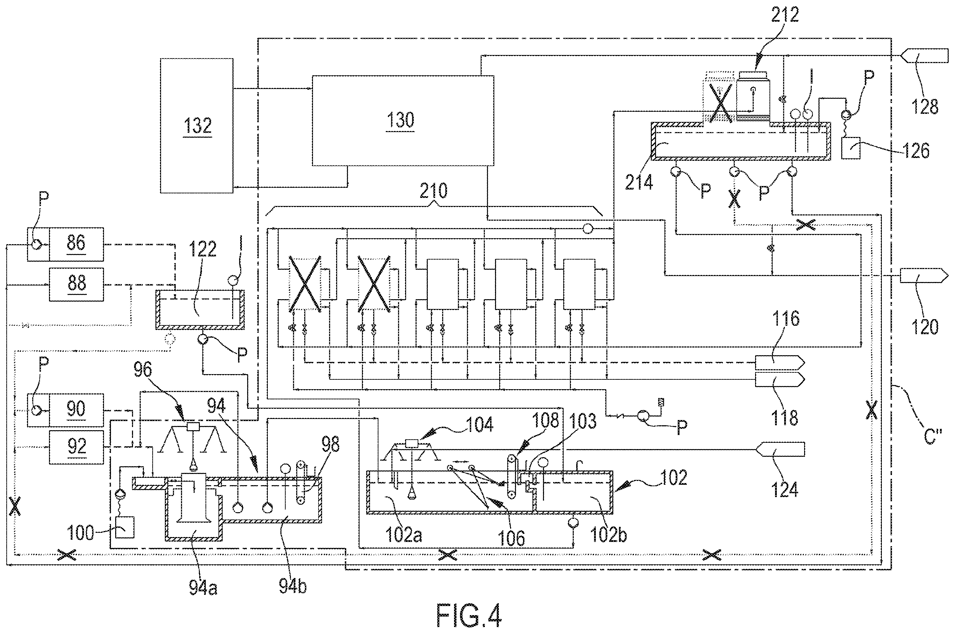

Fig. 4 represents in a flowchart a direct cooling water treatment plant of a steel plant for the production of long products according to the invention. In contrast to the state of the art (figure 3), it can be immediately noted that the two cooling towers are replaced with only one **212,** which also allows to reduce the volume of the respective tank **214.** Also missing is the line with relative pump that leads from the tank **214,** which in the state of the art, was used to supply the users **90** and **92,** which in the example represented, instead, are fed directly from the tank **122,** which now partly supplies the users **90** and **92** and the tank **102** which will then lead to feeding the users **86** and **88.** The reduction of the quantity of water that then reaches the tank **102** and the subsequent cleaning units allows to reduce the number of filters inside the battery of the filters **210.** The water that derives from the cooling tower **212** now no longer feeds the users **90** and **92,** but in addition to the users **86** and **88** also directly the tank **122** to compensate for any deficit due to deficiencies of the quantity deriving from the direct passage from **86** and **88** to **90** and **92.** The variations with respect to the plant represented in figure 3 have been highlighted with dotted lines and in the case of cancellations of individual elements of the plant also with crosses.

The example of the state of the art (figure 3) and of the invention (figure 4) always comprise a single water circuit, respectively **C**' and **C",** but the two groups of users **86, 88** and **90, 92** do not reach separately the same longitudinal tank **102,** and from there the battery of filters **110** or **210** and cooling tower(s) **112** and **212,** but are first connected in series.

The flow from the tank **122** to the users **90** and **92** is about 870 m³/h, while the flow to the tank **102b** is reduced by about a third. In this variant of the invention, instead, the inlet temperature Tᵢ for the users **90** and **92** increases from 35°C to 43°C.

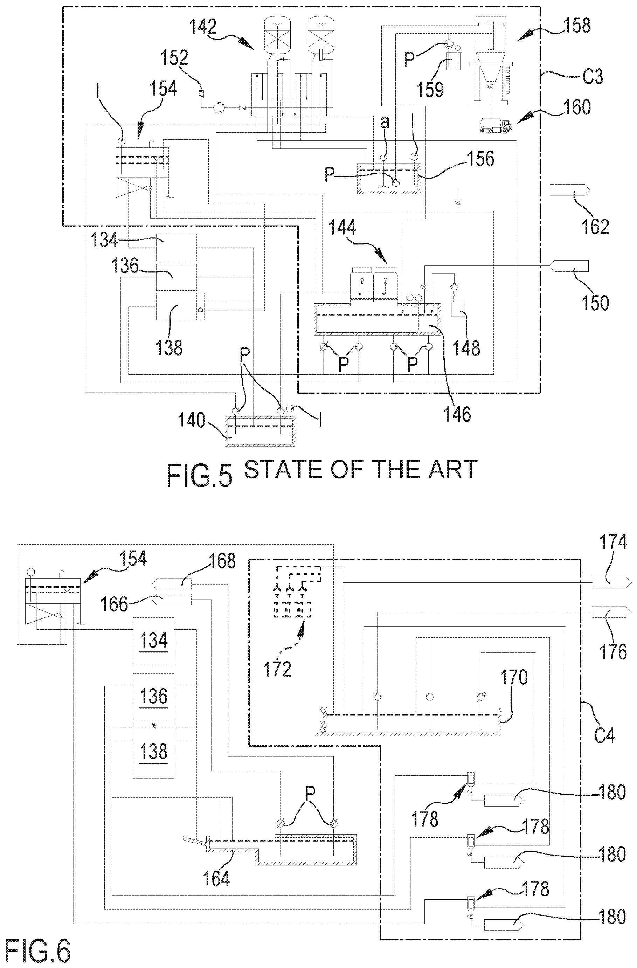

Fig. 5 represents in a flowchart a direct cooling water treatment plant for accelerated cooling **134,** side spray **136** and direct quenching **138** users. The three cooling water users discharge the dirty and heated water into a tank **140** that is connected to a double cooling tower **144** with a single-chamber tank **146** that can be fed by a chemical dispenser **148** and by make-up water **150** and to a battery of filters **142.** The water contained in the tank **146** can be pumped through relative pumps **p** directly to the user **138** or to the user **136,** to the battery of sand filters **146** equipped with an air blower **152** for cleaning them or a storage and distribution tank **154** which, in turn, feeds the user **134** and the tank **146** of the cooling towers **144.** The backwash water treated in the filters **142** reaches a collecting tank **156** which sends the water to a sludge thickener **158,** equipped with a chemical dispenser **159,** and which discharges the sludge to a truck **160** or other waste disposal means, while discharging the water that is exiting the thickening into the tank **146** of the cooling towers **144.** The line connecting the tank **146** to the storage and distribution tank **154** is equipped with a blowdown system **162.**

Fig. 6 represents in a flowchart the direct cooling water treatment plant according to figure 5 modified according to the invention. The plant is simplified as the exiting waters do not have to be cleaned separately, but they are transferred to a collecting tank with the possibility of sending them from there directly to a sheet rolling mill, a high-pressure circuit **166** and a low-pressure circuit **168.** The users **134, 136** and **138** are fed, respectively, by the storage and distribution tank **154** and by a tank **170** that collects the clean and cooled waters from the plant (not represented) that treats the waters exiting the rolling mills **166** and **168.** This tank is also supplied by chemical dispensers **172,** make-up water **174** and is equipped with a blowdown unit **176.** The tank **170,** in addition to supplying the users **136** and **138** also feeds the storage and distribution tank **154,** with the possibility of first passing the water through the relative self-cleaning filter units **178,** the backwash water **180** can be destined to scale pits.

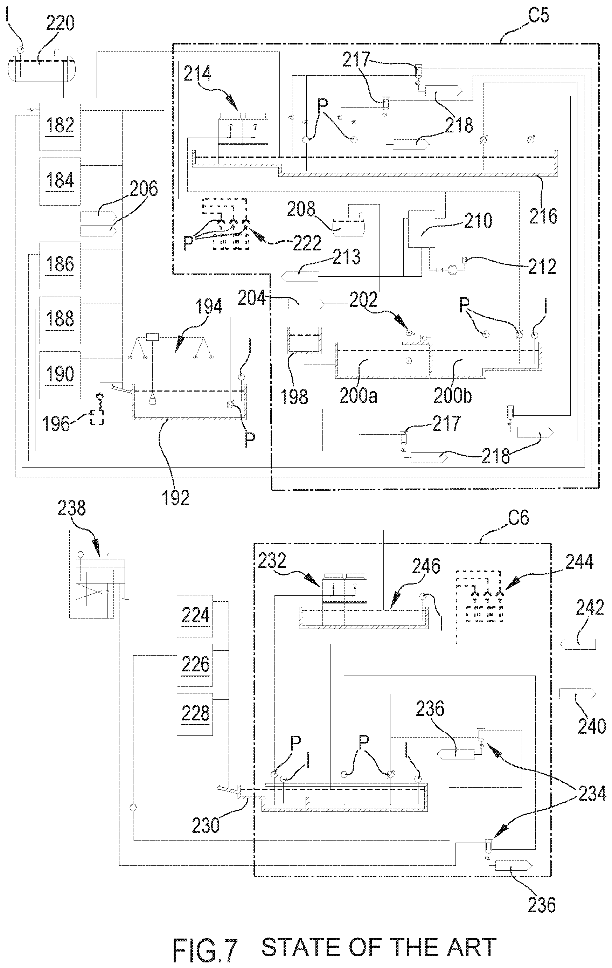

The overall cooling water treatment circuits of figures 5 and 6 are designated with **C3** and **C4** respectively, while the separate circuits represented in Figure 7 below are designated with **C5** and **C6.**

Fig. 7 represents in a flowchart the separated direct cooling water treatment plants of a steel plant for the production of long products according to the state of the art. There are several direct cooling water users: a thin strip casting machine **182,** sprayers **184** thereof, a rolling mill with high-pressure circuit **186,** a low-pressure circuit **188** and reheating furnaces **190.** All users feed a tank **192** with bucket **194** for the elimination of scale and a dosing unit for chemical additives **196,** from there the water reaches through an inlet splitter **198** a longitudinal tank **200** divided into two chambers **200a** and **200b.** The chamber **200a** is equipped with an oil separator **202** and can also be fed with water recovered from other parts of the plant **204.** Backwash waters **206** can be introduced from relative filters into the lines from the aforementioned users. From the oil separator **202,** the oil reaches an oil storage **208,** while from the chamber **200b** the water returns into the tank **192** or it reaches, passing a sand filter **210** with blower **212** and with backwash system **213,** the cooling towers **214** that release the cooled water into a longitudinal tank **216.** The water can be purified by filtering it with filters **217** equipped with backwash systems **218.** The filters can return the filtrate to the tank **216** or send it to the users **186, 188, 190, 184, 182** or to the storage and distribution tank which in turn feeds the user **182** or the tank **216** which can receive chemicals from the dispensers **222.** A second water treatment plant **C6** has three users: an accelerated cooling system **224,** a side spray system **226** and a direct quenching system **228** that supply the heated cooling waters in a tank **230,** from where they can be sent to the cooling towers **232,** through a self-cleaning filter **234** with backwash system **236** to a piezoelectric tank **238,** through a self-cleaning filter **234** with backwash system **236** to the users **226** and **228** or to a blowdown **240.** Make-up water **242** is envisaged for the tank **230** as well as chemical dispensers **244.** From the tank **246,** the water passes into the tank **230.**

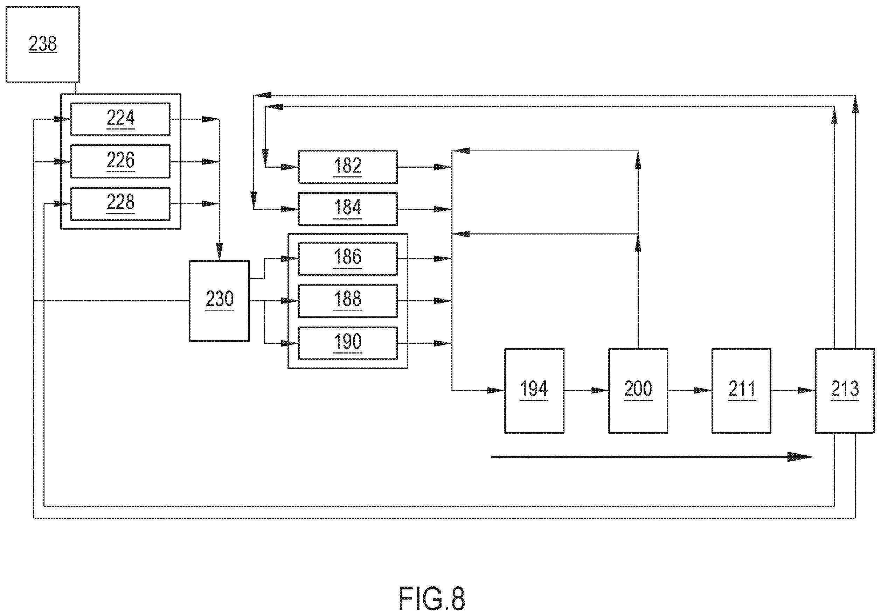

Fig. 8 represents in a simplified flowchart the union of the two cooling water treatment circuits of figure 7 in a single circuit according to the invention. The users **224, 226** and **228** discharge the heated cooling water directly into a tank **230** that feeds a rolling mill **226** and reheating furnaces **228** that discharge their heated waters, like the users **182** and **184** into a scale pit **194,** from where they enter a clarifier **200,** a battery of filters **210,** and cooling towers **214.** From the clarifier they can return to the scale pit to repeat the operation provided therein. The water cooled in the towers enters the users **182** and **184,** the users **224, 226** and **228** or the storage and distribution tank **238** that feeds the users **224** - **228.**

## Claims

1. A steel plant for the production of long products, in particular bars, rods, profiles, wires and the like, or for flat products, in particular strips, sheets and the like comprising:
(a) a plurality of machinery (10, 12, 36, 38, 42; 86, 88, 90, 92; 134, 136, 138, 166, 168; 224, 226, 228, 186, 188, 190) equipped with direct cooling systems and divided into at least a first (10, 12; 86, 88; 134, 136, 138; 224, 226, 228) and a second group (36, 38, 42; 90, 92; 166, 168; 186, 188, 190) of machinery, each group comprising one or more pieces of machinery, wherein the groups of machinery are distinguished by the different higher or lower concentration of scale released into the cooling water accumulated during the use of each group of machinery;
(b) a circuit (C, C", C4) of treatment of direct cooling waters exiting said direct cooling systems, comprising a plurality of cooling water treatment devices (44, 76, 50, 52; 94, 102, 210, 212; 194, 200, 211, 213)
**characterized in that**
(i) said direct cooling systems of said two groups of machinery are connected in series, wherein said direct cooling systems of said second group of machinery (36, 38, 42; 90, 92; 166, 168; 186, 188, 190) producing cooling waters with a higher scale concentration are situated downstream of said direct cooling systems of said first group of machinery (10, 12; 86, 88; 134, 136, 138; 224, 226, 228) producing cooling waters with a lower concentration of scale, so that said direct cooling systems of said first group of machinery feed said direct cooling systems of said second group of machinery; and **in that**
(ii) said direct cooling water treatment circuit (C, C", C4) is arranged downstream of said second group of machinery

2. The steel plant according to any one of the preceding claims, **characterized in that** between said direct cooling systems of said first group and said direct cooling systems of said second group at least one collecting tank (13; 122; 164; 230) is provided along the water flow.

3. The steel plant according to any one of the preceding claims, **characterized in that** the cooling water treatment circuit (C, C", C4) arranged downstream of said second group of machinery comprises a succession of water treatment devices comprising, in the following order, at least one tank, preferably at least two tanks for separating scale and/or oil (44; 94; 194; 76; 102; 200), said tank(s) preferably being divided into several separate chambers (76a, 76b; 102a, 102b) by means of one or more weirs (78; 103), at least one filter unit (50; 210; 211) and at least one cooling tower (52; 112; 212; 213) provided with at least one tank (54; 214) for collecting cooled water and connected to said direct cooling systems of said first group of machinery and/or, if present, to said at least one collecting tank (13; 122; 164; 230).

4. The steel plant according to any one of claims 1 to 3, **characterized in that** said steel plant is a plant for the production of long products, in particular bars, rods, profiles, wires and the like, and that said first group comprises at least one piece of machinery selected from the group consisting of quenching units, tempering units and that said second group comprises at least one piece of machinery selected from the group consisting of fast finishing blocks, rolling mills and reheating furnaces.

5. The steel plant according to claim 4, **characterized in that** said collection tank (122) further feeds the at least one scale and/or oil separation tank (102), in particular a second scale and/or oil separation tank, preferably the most downstream chamber (102b) of the tank.

6. The steel plant according to any one of claims 1 to 3, **characterized in that** said steel plant is a plant for producing flat products, in particular strips, sheets and the like, and that said first group of machinery comprises at least one piece of machinery selected from the group consisting of accelerated cooling units (10; 134), side sweep spray units (12; 136), direct quenching units (138), laminar cooling units, and that said second group of machinery comprises at least one piece of machinery selected from the group consisting of hot strip rolling mills (36; 166; 38; 168) and reheating furnaces (42).

7. A process for treating direct cooling waters of a steel plant for the production of long products, in particular bars, rods, profiles, wires and the like, or for flat products, in particular strips, sheets and the like, comprising the following steps:
(I) performing direct cooling in the steel plant resulting in the production of cooling waters rich in scale content and cooling waters less loaded with scale, depending on the machinery (10, 12, 36, 38, 42; 86, 88, 90, 92; 134, 136, 138, 166, 168; 224, 226, 228, 186, 188, 190) which make up said steel plant, which are divided into at least two groups of machinery, depending on the scale content released from the product processed by said groups of machinery into the cooling water;
(II) conveying the heated cooling water with a lower scale content exiting the respective first group of machinery (10, 12; 86, 88; 134, 136, 138; 224, 226, 228) to the second group of machinery (36, 38, 42; 90, 92; 166, 168; 186, 188, 190) of the plant which produce waters rich in scale, preferably by intermediate storage in a collecting tank (13; 122; 164; 230);
(III) purification of the cooling waters heated and contaminated by the second group of machinery (36, 38, 42; 90, 92; 166, 168; 186, 188, 190) in a succession of water treatment devices comprising in the following order at least one tank, preferably at least two scale and/or oil separation tanks (44; 94; 194; 76; 102; 200), at least one filtration unit (50; 210; 211) and at least one cooling tower (52; 112; 212; 213), wherein preferably under wet bulb conditions < 26°C, the water is cooled to or below 30°C;
(IV) reintroduction, at least partially, of the waters cleaned and cooled during step (III) into the direct cooling systems of said first group of machinery (10, 12; 86, 88; 134, 136, 138; 224, 226, 228) and/or into said collection tank (13; 122; 164; 230), if any.

8. The process for treating direct cooling waters according to claim 7, **characterized in that** the waters leaving the first group of machinery (10, 12; 86, 88; 134, 136, 138; 224, 226, 228) comprise suspended solids ≤ 70 mg/l, in the case of a steel plant for the production of long products, and ≤ 50 mg/l in the case of a steel plant for the production of flat products.

9. The process for treating direct cooling waters according to claim 7 or 8, **characterized in that** the waters exiting the first group of machinery (10, 12; 86, 88; 134, 136, 138; 224, 226, 228) have a ΔT with respect to the inlet temperature required by the second group of machinery (36, 38, 42; 90, 92; 166, 168; 186, 188, 190) which corresponds to < 8 °C in the case of a steel plant for the production of long products and a ΔT of < 5 °C in the case of a steel plant for the production of flat products.

10. The process for treating direct cooling waters according to any one of claims 7 to 9, **characterized in that** the waters exiting the first group of machinery (10, 12; 86, 88; 134, 136, 138; 224, 226, 228) comprise only traces of oils and/or greases, in particular ≤ 2 mg/l of oils and/or greases.

## Patentansprüche

1. Eine Stahlanlage zur Herstellung von Langerzeugnissen, insbesondere von Stäben, Stangen, Profilen, Drähten und dergleichen, oder von Flacherzeugnissen, insbesondere von Bändern, Blechen und dergleichen, umfassend:
(a) eine Vielzahl von Maschinen (10, 12, 36, 38, 42; 86, 88, 90, 92; 134, 136, 138, 166, 168; 224, 226, 228, 186, 188, 190), die mit direkten Kühlsystemen ausgestattet und in mindestens eine erste (10, 12; 86, 88; 134, 136, 138; 224, 226, 228) und eine zweite Gruppe (36, 38, 42; 90, 92; 166, 168; 186, 188, 190) von Maschinen aufgeteilt sind, wobei jede Gruppe eine oder mehrere Maschinen umfasst, wobei sich die Gruppen von Maschinen durch die unterschiedliche höhere oder niedrigere Konzentration von Zunder unterscheiden, der in das Kühlwasser freigesetzt wird und sich während der Verwendung jeder Gruppe von Maschinen ansammelt;
(b) einen Kreislauf (C, C", C4) zur Behandlung von direktem Kühlwasser, das aus den direkten Kühlsystemen austritt, umfassend eine Vielzahl von Kühlwasserbehandlungsvorrichtungen (44, 76, 50, 52; 94, 102, 210, 212; 194, 200, 211, 213),
**dadurch gekennzeichnet, dass**
(i) die direkten Kühlsysteme der beiden Maschinengruppen in Reihe geschaltet sind, wobei die direkten Kühlsysteme der zweiten Maschinengruppe (36, 38, 42; 90, 92; 166, 168; 186, 188, 190), die Kühlwasser mit einer höheren Zunderkonzentration erzeugen, stromabwärts von den direkten Kühlsystemen der ersten Maschinengruppe (10, 12; 86, 88; 134, 136, 138; 224, 226, 228), die Kühlwasser mit einer niedrigeren Zunderkonzentration erzeugen, angeordnet sind, so dass die direkten Kühlsysteme der ersten Maschinengruppe die direkten Kühlsysteme der zweiten Maschinengruppe speisen; **und dadurch, dass**
(ii) der Kreislauf (C, C", C4) zur Behandlung von direktem Kühlwasser stromabwärts der zweiten Maschinengruppe angeordnet ist.

2. Die Stahlanlage nach einem der vorhergehenden Ansprüche, **dadurch gekennzeichnet, dass** zwischen den direkten Kühlsystemen der ersten Gruppe und den direkten Kühlsystemen der zweiten Gruppe mindestens ein Sammelbehälter (13; 122; 164; 230) entlang des Wasserflusses vorgesehen ist.

3. Die Stahlanlage nach einem der vorhergehenden Ansprüche, **dadurch gekennzeichnet, dass** der Kreislauf (C, C", C4) zur Behandlung von direktem Kühlwasser, der stromabwärts von der zweiten Maschinengruppe angeordnet ist, eine Folge von Wasseraufbereitungsvorrichtungen umfasst, die in der folgenden Reihenfolge mindestens einen Tank, vorzugsweise mindestens umfassend zwei Tanks zur Abscheidung von Zunder und/oder Öl (44; 94; 194; 76; 102; 200), wobei der/die Tank(s) vorzugsweise durch ein oder mehrere Wehre (78; 103) in mehrere getrennte Kammern (76a, 76b; 102a, 102b) unterteilt ist/sind, mindestens eine Filtereinheit (50; 210; 211) und mindestens einen Kühlturm (52; 112; 212; 213), der mit mindestens einem Tank (54; 214) zum Sammeln von gekühltem Wasser versehen und mit den direkten Kühlsystemen der ersten Maschinengruppe und/oder, falls vorhanden, mit dem mindestens einen Sammelbehälter (13; 122; 164; 230) verbunden ist.

4. Die Stahlanlage nach einem beliebigen der Ansprüche 1 bis 3, **dadurch gekennzeichnet, dass** die Stahlanlage eine Anlage zur Herstellung von Langerzeugnissen, insbesondere von Stäben, Stangen, Profilen, Drähten und dergleichen ist, und dass die erste Gruppe mindestens eine Maschine umfasst, die aus der Gruppe ausgewählt ist, die aus Abschreckeinheiten und Tempereinheiten besteht, und dass die zweite Gruppe mindestens eine Maschine umfasst, die aus der Gruppe ausgewählt ist, die aus Schnellveredelungsblöcken, Walzwerken und Wiederaufheizöfen besteht.

5. Die Stahlanlage nach Anspruch 4, **dadurch gekennzeichnet, dass** der Sammeltank (122) weiterhin den mindestens einen Zunder- und/oder Ölabscheidebehälter (102), insbesondere einen zweiten Zunder- und/oder Ölabscheidebehälter, vorzugsweise die am weitesten stromabwärts gelegene Kammer (102b) des Behälters, speist.

6. Die Stahlanlage nach einem der Ansprüche 1 bis 3, **dadurch gekennzeichnet, dass** die Stahlanlage eine Anlage zur Herstellung von Flachprodukten, insbesondere von Bändern, Blechen und dergleichen ist, und dass die erste Gruppe von Maschinen mindestens eine Maschine umfasst, die aus der Gruppe ausgewählt ist, die aus beschleunigten Kühleinheiten (10; 134), Seitensprüheinheiten (12; 136), Direktabschreckungseinheiten (138), Laminarkühleinheiten besteht, und dass die zweite Gruppe von Maschinen mindestens eine Maschine umfasst, die aus der Gruppe ausgewählt ist, die aus Warmbandwalzwerken (36; 166; 38; 168) und Wiederaufheizöfen (42) besteht.

7. Verfahren zur Behandlung von Direktkühlwässern einer Stahlanlage zur Herstellung von Langerzeugnissen, insbesondere von Stäben, Stangen, Profilen, Drähten und dergleichen, oder von Flacherzeugnissen, insbesondere von Bändern, Blechen und dergleichen, umfassend die folgenden Schritte:
(I) Durchführen einer direkten Kühlung in der Stahanlage, was zur Erzeugung von Kühlwässern mit hohem Zundergehalt und Kühlwässern mit geringerem Zundergehalt führt, je nach den Maschinen (10, 12, 36, 38, 42; 86, 88, 90, 92; 134, 136, 138, 166, 168; 224, 226, 228, 186, 188, 190), aus denen die Stahlanlage besteht und die in mindestens zwei Maschinengruppen unterteilt sind, je nach dem Zundergehalt, der von dem von den Maschinengruppen verarbeiteten Produkt in das Kühlwasser abgegeben wird;
(II) Leiten des erwärmten Kühlwassers mit geringerem Zundergehalt aus der jeweiligen ersten Maschinengruppe (10, 12; 86, 88; 134, 136, 138; 224, 226, 228) in die zweite Maschinengruppe (36, 38, 42; 90, 92; 166, 168; 186, 188, 190) der Anlage, die zunderreiche Wässer erzeugen, vorzugsweise durch Zwischenspeicherung in einem Sammelbehälter (13; 122; 164; 230);
(III) Reinigung des von der zweiten Maschinengruppe (36, 38, 42; 90, 92; 166, 168; 186, 188, 190) erhitzten und verunreinigten Kühlwassers in einer Folge von Wasseraufbereitungsvorrichtungen, die in der folgenden Reihenfolge mindestens einen Behälter, vorzugsweise mindestens zwei Zunder- und/oder Ölabscheidebehälter (44; 94; 194; 76; 102; 200), mindestens eine Filtrationseinheit (50; 210; 211) und mindestens einen Kühlturm (52; 112; 212; 213) umfassen, wobei das Wasser vorzugsweise unter Feuchtkugel-Bedingungen < 26°C auf oder unter 30°C gekühlt wird;
(IV) zumindest teilweise Wiedereinleitung des in Schritt (III) gereinigten und gekühlten Wassers in die direkten Kühlsysteme der ersten Maschinengruppe (10, 12; 86, 88; 134, 136, 138; 224, 226, 228) und/oder in den Sammeltank (13; 122; 164; 230), falls vorhanden.

8. Verfahren zur Behandlung von direkten Kühlwässern nach Anspruch 7, **dadurch gekennzeichnet, dass** die Wässer, die die erste Gruppe von Maschinen (10, 12; 86, 88; 134, 136, 138; 224, 226, 228) verlassen, im Falle einer Stahlanlage zur Herstellung von Langerzeugnissen suspendierte Feststoffe ≤ 70 mg/l und im Falle einer Stahlanlage zur Herstellung von Flacherzeugnissen ≤ 50 mg/l enthalten.

9. Verfahren zur Behandlung von direkten Kühlwässern nach Anspruch 7 oder 8, **dadurch gekennzeichnet, dass** die aus der ersten Maschinengruppe (10, 12; 86, 88; 134, 136, 138; 224, 226, 228) austretenden Wässer ein ΔT in Bezug auf die von der zweiten Maschinengruppe (36, 38, 42; 90, 92; 166, 168; 186, 188, 190) geforderten Einlasstemperatur aufweisen, dass < 8 °C im Falle einer Stahlanlage für die Herstellung von Langerzeugnissen und einem ΔT von < 5 °C im Falle einer Stahlanlage für die Herstellung von Flacherzeugnissen entspricht.

10. Verfahren zur Behandlung von direkten Kühlwässern nach einem beliebigen der Ansprüche 7 bis 9, **dadurch gekennzeichnet, dass** die aus der ersten Maschinengruppe (10, 12; 86, 88; 134, 136, 138; 224, 226, 228) austretenden Wässer nur Spuren von Ölen und/oder Fetten, insbesondere ≤ 2 mg/l Öle und/oder Fette, enthalten.

## Revendications

1. Une installation sidérurgique pour la production de produits longs, en particulier de barres, tiges, profilés, fils et similaires, ou de produits plats, en particulier de bandes, de tôles et similaires, comprenant
(a) une pluralité de machines (10, 12, 36, 38, 42; 86, 88, 90, 92; 134, 136, 138, 166, 168; 224, 226, 228, 186, 188, 190) équipées de systèmes de refroidissement direct et divisées en au moins un premier (10, 12; 86, 88; 134, 136, 138; 224, 226, 228) et un deuxième groupe (36, 38, 42; 90, 92; 166, 168; 186, 188, 190) de machines, chaque groupe comprenant une ou plusieurs pièces de machines, les groupes de machines se distinguant par la concentration plus ou moins élevée de calamine libérée dans l'eau de refroidissement accumulée pendant l'utilisation de chaque groupe de machines;
b) un circuit (C, C", C4) de traitement des eaux de refroidissement direct sortant desdits systèmes de refroidissement direct, comprenant une pluralité de dispositifs de traitement de l'eau de refroidissement (44, 76, 50, 52; 94, 102, 210, 212; 194, 200, 211, 213),
**caractérisé en ce que**
(i) lesdits systèmes de refroidissement direct desdits deux groupes de machines sont connectés en série, dans lesquels lesdits systèmes de refroidissement direct dudit deuxième groupe de machines (36, 38, 42; 90, 92; 166, 168; 186, 188, 190) produisant des eaux de refroidissement à plus haute concentration de calamine sont situés en aval desdits systèmes de refroidissement direct dudit premier groupe de machines (10, 12; 86, 88; 134, 136, 138; 224, 226, 228) produisant des eaux de refroidissement à plus basse concentration de calamine, de sorte que lesdits systèmes de refroidissement direct dudit premier groupe de machines alimentent lesdits systèmes de refroidissement direct dudit deuxième groupe de machines; et **en ce que**
(ii) (ii) ledit circuit de traitement direct de l'eau de refroidissement (C, C", C4) est disposé en aval dudit deuxième groupe de machines.

2. Installation sidérurgique selon l'une quelconque des revendications précédentes, **caractérisée en ce qu'**entre les systèmes de refroidissement direct du premier groupe et les systèmes de refroidissement direct du deuxième groupe, au moins un réservoir collecteur (13; 122; 164; 230) est prévu le long du flux d'eau.

3. Installation sidérurgique selon l'une quelconque des revendications précédentes, **caractérisée en ce que** le circuit de traitement de l'eau de refroidissement (C, C", C4) disposé en aval dudit deuxième groupe de machines comprend une succession de dispositifs de traitement de l'eau comprenant, dans l'ordre suivant, au moins un réservoir, de préférence au moins deux réservoirs de séparation de la calamine et/ou de l'huile (44; 94; 194; 76; 102; 200), ce(s) réservoir(s) étant de préférence divisé(s) en plusieurs chambres séparées (76a, 76b; 102a, 102b) au moyen d'un ou plusieurs déversoirs (78; 103), au moins une unité de filtration (50; 210; 211) et au moins une tour de refroidissement (52; 112; 212; 213) pourvue d'au moins un réservoir (54; 214) de collecte d'eau refroidie et raccordée auxdits systèmes de refroidissement direct dudit premier groupe de machines et/ou, le cas échéant, audit au moins un réservoir collecteur (13; 122; 164; 230).

4. Installation sidérurgique selon une quelconque des revendications 1 à 3, **caractérisée en ce que** ladite installation sidérurgique est une installation de production de produits longs, en particulier de barres, de tiges, de profilés, de fils et similaires, et **en ce que** ledit premier groupe comprend au moins une machine choisie dans le groupe constitué par les unités de trempe, les unités de revenu et **en ce que** ledit deuxième groupe comprend au moins une machine choisie dans le groupe constitué par les blocs de finition rapide, les laminoirs et les fours de réchauffage.

5. Installation sidérurgique selon la revendication 4, **caractérisée en ce que** ledit réservoir collecteur (122) alimente en outre le au moins un réservoir de séparation de la calamine et/ou de l'huile (102), en particulier un deuxième réservoir de séparation de la calamine et/ou de l'huile, de préférence la chambre la plus en aval (102b) du réservoir.

6. Installation sidérurgique selon l'une quelconque des revendications 1 à 3, **caractérisée en ce que** ladite installation sidérurgique est une installation de production de produits plats, en particulier de bandes, de tôles et similaires, et **en ce que** ledit premier groupe de machines comprend au moins une pièce de machine choisie dans le groupe constitué par les unités de refroidissement accéléré (10; 134), des unités de jet de balayage latéral (12; 136), des unités de trempe directe (138), des unités de refroidissement laminaire, et que ledit deuxième groupe de machines comprend au moins une machine choisie dans le groupe constitué par les laminoirs à bandes à chaud (36 ; 166; 38 ; 168) et les fours de réchauffage (42).

7. Procédé de traitement des eaux de refroidissement direct d'une installation sidérurgique pour la production de produits longs, en particulier de barres, de tiges, de profilés, de fils et similaires, ou de produits plats, en particulier de bandes, de tôles et similaires, comprenant les étapes suivantes:
(I) réalisation d'un refroidissement direct dans l'installation sidérurgique résultant en la production d'eaux de refroidissement riches en calamine et d'eaux de refroidissement moins chargées en calamine, en fonction des machines (10, 12, 36, 38, 42; 86, 88, 90, 92; 134, 136, 138, 166, 168; 224, 226, 228, 186, 188, 190) qui composent ladite installation sidérurgique, lesquelles sont divisées en au moins deux groupes de machines, en fonction de la calamine libérée du produit traité par lesdits groupes de machines dans l'eau de refroidissement;
(II) transporter l'eau de refroidissement chauffée à plus basse teneur en calamine sortant du premier groupe de machines (10, 12; 86, 88; 134, 136, 138; 224, 226, 228) vers le deuxième groupe de machines (36, 38, 42; 90, 92; 166, 168; 186, 188, 190) de l'installation qui produit des eaux riches en calamine, de préférence par un stockage intermédiaire dans un réservoir collecteur (13; 122; 164; 230);
(III) purification des eaux de refroidissement chauffées et contaminées par le deuxième groupe de machines (36, 38, 42; 90, 92; 166, 168; 186, 188, 190) dans une succession de dispositifs de traitement de l'eau comprenant dans l'ordre suivant au moins un réservoir, de préférence au moins deux réservoirs de séparation de la calamine et/ou de l'huile (44; 94; 194; 76; 102; 200), au moins une unité de filtration (50; 210; 211) et au moins une tour de refroidissement (52; 112; 212; 213), dans laquelle, de préférence dans des conditions de bulbe humide < 26°C, l'eau est refroidie à 30°C ou moins;
(IV) réintroduction, au moins partielle, des eaux purifiées et refroidies au cours de l'étape (III) dans les systèmes de refroidissement direct dudit premier groupe de machines (10, 12; 86, 88; 134, 136, 138; 224, 226, 228) et/ou dans ledit réservoir collecteur (13; 122; 164; 230), s'il y en a un.

8. Procédé de traitement des eaux de refroidissement direct selon la revendication 7, **caractérisé en ce que** les eaux sortant du premier groupe de machines (10, 12; 86, 88; 134, 136, 138; 224, 226, 228) comprennent des solides en suspension ≤ 70 mg/l, dans le cas d'une installation sidérurgique pour la production de produits longs, et ≤ 50 mg/l dans le cas d'une installation sidérurgique pour la production de produits plats.

9. Procédé de traitement des eaux de refroidissement direct selon la revendication 7 ou 8, **caractérisé en ce que** les eaux sortant du premier groupe de machines (10, 12; 86, 88; 134, 136, 138; 224, 226, 228) ont un ΔT par rapport à la température d'entrée demandée par le deuxième groupe de machines (36, 38, 42; 90, 92; 166, 168; 186, 188, 190) qui correspond à < 8 °C dans le cas d'une installation sidérurgique pour la production de produits longs et à un ΔT de < 5 °C dans le cas d'une installation sidérurgique pour la production de produits plats.

10. Procédé de traitement des eaux de refroidissement direct selon l'une quelconque des revendications 7 à 9, **caractérisé en ce que** les eaux sortant du premier groupe de machines (10, 12 ; 86, 88 ; 134, 136, 138 ; 224, 226, 228) comprennent seulement des traces d'huiles et/ou de graisses, en particulier ≤ 2 mg/l d'huiles et/ou de graisses.
